# EUROPEAN PATENT SPECIFICATION

(11) **EP 4 084 420 B1**
(45) Date of publication and mention of the grant of the patent: **22.05.2024**
(21) Application number: 22171010.6
(22) Date of filing: 29.04.2022
(51) Int. Cl.: H04L 12/403

(54) **VEHICLE AND CONTROL SYSTEM FOR VEHICLE**
FAHRZEUG UND STEUERUNGSSYSTEM FÜR EIN FAHRZEUG
VÉHICULE ET SYSTÈME DE COMMANDE POUR VÉHICULE

(30) Priority: 30.04.2021 CN 202110482686
(43) Date of publication of application: 02.11.2022
(73) Proprietor: Huawei Digital Power Technologies Co., Ltd., Shenzhen, 518043 (CN)
(72) Inventor: SHEN, Tianmin, Shenzhen, 518043, P.R.C. (CN); MA, Wenwu, Shenzhen, 518043, P.R.C. (CN); TANG, Zhengyi, Shenzhen, 518043, P.R.C. (CN)
(74) Representative: Gill Jennings & Every LLP

(56) References cited:
- EP-A1- 3 101 617
- WO-A1-2019/023491
- WO-A1-2020/151751
- US-A1- 2012 105 637
- US-A1- 2019 041 959
- US-A1- 2020 078 089

## Description

### TECHNICAL FIELD

This application relates to the field of electronic and electrical architectures, and more specifically, to a vehicle and a control system for a vehicle.

### BACKGROUND

An electronic and electrical architecture (EEA) is a network structure for location layout and function interaction of all electronic control units (ECU) of a vehicle. The architecture uniformly manages network communication forms, function boundaries, and interaction logic of all ECUs of the vehicle, is the basis of vehicle control, and determines a product combination form of components of the vehicle and a capability of updating software functions of the vehicle, thereby determining market competitiveness of the vehicle.

As the electronic and electrical architecture is crucial to vehicle control, a safe, simple, and flexible electronic and electrical architecture is urgently needed to empower vehicle control, upgrade software functions, and improve a product capability of the vehicle. WO 2019/023491 A1 discusses a vehicle line-of-sight optical communication system and method for use in ad hoc networks formed with a vehicle during traveling of the vehicle along a roadway. US 2019/0041959 A1 describes an apparatus which includes: at least one processing circuit; at least one array associated with the at least one processing circuit; a power controller to manage power consumption of the apparatus; and a fabric bridge coupled to the power controller. The fabric bridge and power controller may be configured to implement a handshaking protocol to enable the fabric bridge to receive data from the at least one array via a sideband communication path and send the data to a system memory coupled to the apparatus via a primary communication path, prior to entry of the apparatus into a first low power state.

### SUMMARY

This application provides a control system for a vehicle, to form electrical energy and/or communication redundancy in the vehicle, and improve security performance of the control system for the vehicle.

According to a first aspect, a control system for a vehicle is provided according to appended claim 1.

In this embodiment of this application, the plurality of first central communications interfaces and the plurality of first domain communications interfaces form the plurality of communications interface pairs between the central controller and the plurality of domain controllers. Then the central controller may communicate with the plurality of domain controllers through the plurality of communications interface pairs respectively. In this way, a first layer of communications network may be formed between the central controller and the plurality of domain controllers. Each of at least two domain controllers in the plurality of domain controllers further includes a second domain communications interface, and the at least two domain controllers may communicate with each other through the second domain communications interfaces, so that a second layer of communications network may be formed between the at least two domain controllers. Therefore, according to the control system provided in this embodiment of this application, communication redundancy can be formed between the central controller of the vehicle and the at least two domain controllers, so that when a communication fault occurs in any one layer of communications network, communication between the central controller and the at least two domain controllers can be implemented through another layer of communications network. This improves security of the control system for the vehicle.

With reference to the first aspect, in some implementations of the first aspect, power source interfaces are provided according to appended claim 2.

With reference to the first aspect, in some implementations of the first aspect, at least one of the plurality of domain controllers includes a first power supply interface, and the first power supply interface is configured to obtain electrical energy from a battery pack and/or a battery of the vehicle.

With reference to the first aspect, in some implementations of the first aspect, the central controller further includes a second power supply interface, and the second power supply interface is configured to obtain electrical energy from the battery pack and/or the battery of the vehicle.

With reference to the first aspect, in some implementations of the first aspect, each of the plurality of domain controllers further includes a fourth power source interface, and each of the plurality of domain controllers performs electrical energy transmission with an intra-domain actuator and/or a sensor of each domain controller through the fourth power source interface.

With reference to the first aspect, in some implementations of the first aspect, each of the plurality of domain controllers further includes a third domain communications interface, and each of the plurality of domain controllers communicates with the intra-domain actuator and/or the sensor of each domain controller through the third domain communications interface.

With reference to the first aspect, in some implementations of the first aspect, the central controller further includes a first extensible interface, and the first extensible interface is configured to connect to a computing device and/or a storage device.

With reference to the first aspect, in some implementations of the first aspect, at least one of the plurality of domain controllers further includes a second extensible interface, and the second extensible interface is configured to connect to the computing device and/or the storage device.

According to the control system for the vehicle provided in this embodiment of this application, the central controller and/or the domain controller further include/includes an extensible interface, and can be connected to the computing device and/or the storage device through the expansion interface. This enables the control system for the vehicle to be more extensible and flexible.

According to an example, a control system for a vehicle is provided. The control system includes a plurality of domain controllers and a central controller. The plurality of domain controllers are configured to respectively obtain status information of a plurality of domains, and send the status information of the plurality of domains to the central controller. The vehicle includes the plurality of domains, and the plurality of domain controllers are in a one-to-one correspondence with the plurality of domains. The central controller is configured to receive the status information of the plurality of domains from the plurality of domain controllers, and generate a domain control signal based on the status information of the plurality of domains, where the domain control signal is used to control operating statuses of the plurality of domains. The central controller includes a plurality of first power source interfaces, each of the plurality of domain controllers includes a second power source interface, the plurality of first power source interfaces and a plurality of second power source interfaces form a plurality of power source interface pairs, and the central controller performs electrical energy transmission with the plurality of domain controllers through the plurality of power source interface pairs respectively. In addition, each of at least two domain controllers in the plurality of domain controllers further includes a third power source interface, and the at least two domain controllers perform electrical energy transmission with each other through the third power source interfaces.

In this embodiment of this application, the plurality of first power source interfaces and the plurality of second power source interfaces form the plurality of power source interface pairs between the central controller and the plurality of domain controllers. Then the central controller may perform electrical energy transmission with the plurality of domain controllers through the plurality of power source interface pairs respectively. In this way, a first layer of electrical energy network may be formed between the central controller and the plurality of domain controllers. Each of at least two domain controllers in the plurality of domain controllers further includes the third power source interface, and the at least two domain controllers may perform electrical energy transmission with each other through the third power source interfaces, so that a second layer of electrical energy network may be formed between the at least two domain controllers. Therefore, according to the control system provided in this embodiment of this application, electrical energy redundancy can be formed between the central controller of the vehicle and the at least two domain controllers, so that when a fault occurs in electrical energy transmission in any one layer of electrical energy network, electrical energy transmission between the central controller and the at least two domain controllers can be implemented through another layer of electrical energy network. This improves security of the control system for the vehicle.

It should be understood that, in this application, any one of the central controller and the plurality of domain actuators are in equal positions in terms of electrical energy transmission. In other words, if one domain controller can obtain electrical energy, the domain actuator may be understood as a power distribution center, and supplies power to another component. If the central controller can obtain electrical energy, the central controller may be understood as a power distribution center, and supplies power to another component.

With reference to the example, in some implementations of the example, the plurality of domain controllers form a ring electrical energy link through the third power source interfaces, the ring electrical energy link includes a plurality of nodes, and each of the plurality of domain controllers forms one node in the plurality of nodes.

According to the control system provided in this embodiment of this application, a starring network architecture may be formed with connections between the first power source interface of the central controller and the second power source interface and the third power source interface of the plurality of domain controllers. This ensures security of the control system for the vehicle, and simplifies wiring of an electronic and electrical architecture of the vehicle.

With reference to the example, in some implementations of the example, the plurality of domain controllers form a chain electrical energy link through the third power source interfaces, the chain electrical energy link includes a plurality of nodes, and each of the plurality of domain controllers forms one node in the plurality of nodes.

With reference to the example, in some implementations of the example, at least one of the plurality of domain controllers includes a first power supply interface, and the first power supply interface is configured to obtain electrical energy from a battery pack and/or a battery of the vehicle.

With reference to the example, in some implementations of the example, the central controller further includes a second power supply interface, and the second power supply interface is configured to obtain electrical energy from the battery pack and/or the battery of the vehicle.

With reference to the example, in some implementations of the example, each of the plurality of domain controllers further includes a fourth power source interface, and each of the plurality of domain controllers performs electrical energy transmission with an intra-domain actuator and/or a sensor of each domain controller through the fourth power source interface.

With reference to the example, in some implementations of the example, the central controller further includes an extensible interface, and the extensible interface is configured to connect to a computing device and/or a storage device.

With reference to the example, in some implementations of the example, at least one of the plurality of domain controllers further includes a second extensible interface, and the second extensible interface is configured to connect to the computing device and/or the storage device.

According to the control system for the vehicle provided in this embodiment of this application, the central controller and/or the domain controller further include/includes an extensible interface, and can be connected to the computing device and/or the storage device through the expansion interface. This enables the control system for the vehicle to be more extensible and flexible.

According to another example, a vehicle is provided. The vehicle includes the control system in any one of the implementations of the first aspect and the first example.

### BRIEF DESCRIPTION OF DRAWINGS

FIG. 1 is a schematic diagram of an application scenario according to an embodiment of this application;
FIG. 2 is a schematic block diagram of a control system for a vehicle according to an embodiment of this application;
FIG. 3 is another schematic block diagram of a control system for a vehicle according to an embodiment of this application;
FIG. 4 is still another schematic block diagram of a control system for a vehicle according to an embodiment of this application;
FIG. 5 is yet another schematic block diagram of a control system for a vehicle according to an embodiment of this application;
FIG. 6 is still yet another schematic block diagram of a control system for a vehicle according to an embodiment of this application;
FIG. 7 is a further schematic block diagram of a control system for a vehicle according to an embodiment of this application;
FIG. 8 is a still further schematic block diagram of a control system for a vehicle according to an embodiment of this application; and
FIG. 9 is a yet still further schematic block diagram of a control system for a vehicle according to an embodiment of this application.

### DESCRIPTION OF EMBODIMENTS

The following describes in detail a control system for a vehicle provided in embodiments of this application with reference to the accompanying drawings.

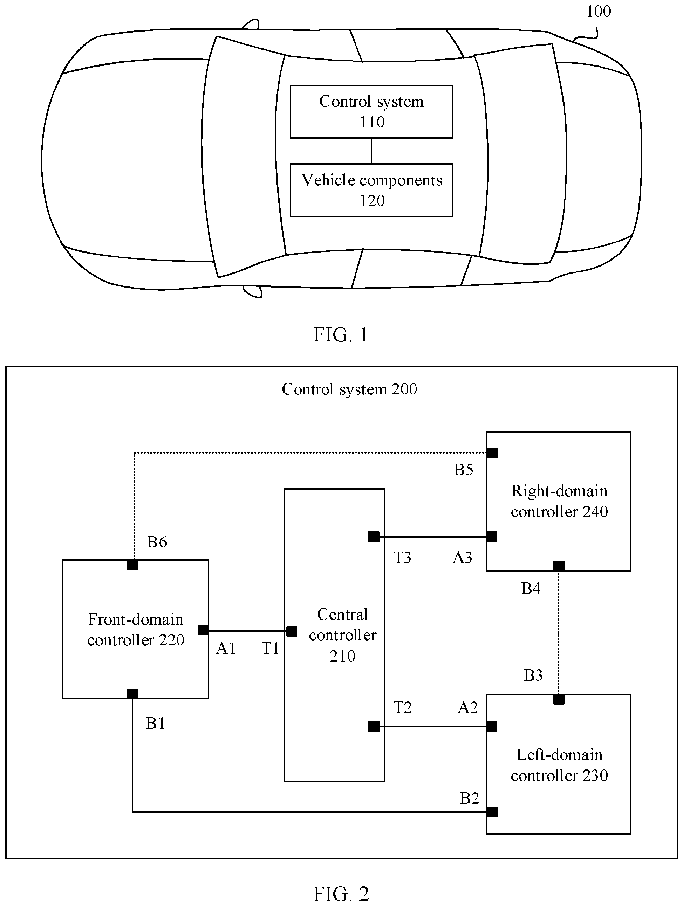

FIG. 1 is a schematic diagram of an application scenario according to an embodiment of this application. As shown in FIG. 1, the control system provided in this embodiment of this application may be applied to a vehicle 100. The vehicle 100 may include a control system 110 and vehicle components 120. The control system 110 is configured to provide the vehicle components 120 with some or all of data processing functions or control functions required by the vehicle components 120. The vehicle components 120 include an actuating element that is configured to perform a particular function, where the actuating element may be, for example, a sensor or an actuator in the vehicle. Optionally, the vehicle components may further include an electronic control unit (ECU).

In this embodiment of this application, the vehicle components 120 may include vehicle components in a chassis domain and vehicle components in a body domain. The control system 110 may provide control commands for the vehicle components in the body domain and the vehicle components in the chassis domain. The vehicle components in the body domain include door and window lift controllers, an electric rearview mirror, air conditioners, central door locks, and the like. The vehicle components in the chassis domain include vehicle components in a braking system, vehicle components in a steering system, and vehicle components in an acceleration system, for example, an accelerator.

The control system for a vehicle provided in this embodiment of this application may be applied to an intelligent vehicle, a new energy vehicle, a conventional vehicle, or the like. The new energy vehicle (NEV) includes a pure electric vehicle (pure EV/battery EV), a hybrid electric vehicle (REV), a range extended electric vehicle (REEV), a plug-in hybrid electric vehicle (PREV), a fuel cell vehicle, or another type of new energy vehicle. The conventional vehicle includes a gasoline vehicle, a diesel vehicle, or the like.

The following describes in detail the control system for a vehicle provided in embodiments of this application with reference to FIG. 2 to FIG. 9.

An embodiment of this application provides a control system for a vehicle. The control system includes a plurality of domain controllers and a central controller. The vehicle may include a plurality of domains, and the plurality of domain controllers are in a one-to-one correspondence with the plurality of domains. The plurality of domain controllers are configured to respectively obtain status information of the plurality of domains, and send the status information of the plurality of domains to the central controller. The central controller is configured to receive the status information of the plurality of domains from the plurality of domain controllers, and generate a domain control signal based on the status information of the plurality of domains, where the domain control signal is used to control operating statuses of the plurality of domains. The central controller includes a plurality of first central communications interfaces, each of the plurality of domain controllers includes a first domain communications interface, and the plurality of first central communications interfaces and a plurality of first domain communications interfaces form a plurality of communications interface pairs. The central controller communicates with the plurality of domain controllers through the plurality of communications interface pairs respectively. Each of at least two domain controllers in the plurality of domain controllers further includes a second domain communications interface, and the at least two domain controllers communicate with each other through the second domain communications interfaces.

In this embodiment of this application, the plurality of first central communications interfaces and the plurality of first domain communications interfaces form the plurality of communications interface pairs between the central controller and the plurality of domain controllers. Then the central controller may communicate with the plurality of domain controllers through the plurality of communications interface pairs respectively. In this way, a first layer of communications network may be formed between the central controller and the plurality of domain controllers. Each of at least two domain controllers in the plurality of domain controllers further includes a second domain communications interface, and the at least two domain controllers may communicate with each other through the second domain communications interfaces, so that a second layer of communications network may be formed between the at least two domain controllers. Therefore, according to the control system provided in this embodiment of this application, communication redundancy can be formed between the central controller of the vehicle and the at least two domain controllers, so that when a communication fault occurs in any one layer of communications network, communication between the central controller and the at least two domain controllers can be implemented through another layer of communications network. This improves security of the control system for the vehicle.

In addition, according to the control system provided in this embodiment of this application, a starring network architecture may be formed with connections between the first central communications interface of the central controller and the first domain communications interface and the second domain communications interface of the plurality of domain controllers. This ensures security of the control system for the vehicle, and simplifies wiring of an electronic and electrical architecture of the vehicle.

In this application, the status information of the plurality of domains may include a current status of vehicle components in each domain and an environmental status of each domain of the vehicle, for example, an operating mode of a motor, an operating mode of electronic control, a current position of a rearview mirror, a current temperature of an air conditioner, and a temperature inside the vehicle. The operating statuses of the plurality of domains may include changes of the vehicle components in each domain, for example, a change of a motor temperature, a change of an electronic control temperature, a change of a position of a front view mirror, a change of an operating frequency of wiper blades, a change of lift positions of windows, and a change of an air conditioner temperature.

It should be understood that, in this embodiment of this application, the central controller serves as a centralized control center, and incorporates computation and control functions of vehicle dynamics, a chassis, and a vehicle body. Therefore, based on domain control signals of the vehicle dynamics, the chassis, and the vehicle body, the central controller may coordinate vehicle control information and centrally control actions of the components of the vehicle, to implement more efficient control.

It should be further understood that, in this application, the plurality of domain controllers may receive and send signals, and perform signal processing. The domain control signal of the vehicle is generated by the central controller. The plurality of domain controllers may receive the domain control signal sent by the central controller, and drive, based on the area control signal, the vehicle components in each domain to work, that is, control the operating statuses of the plurality of domains.

The control system for the vehicle provided in this application can incorporate all computation and control functions for central control and management, and therefore implement optimal and most appropriate vehicle control.

In addition, in this embodiment of this application, a location of each of the plurality of domain controllers is not limited, and it only needs to be ensured that at least two layers of communications networks are formed between at least two domain controllers.

It should be noted that, in this embodiment of this application, control by the central controller refers to control of the chassis, the body, and dynamics of the vehicle.

FIG. 2 is a schematic block diagram of a control system 200 for a vehicle according to an embodiment of this application. As shown in FIG. 2, the vehicle may be divided into three domains: a front domain, a left domain, and a right domain. The control system 200 may include a central controller 210 and three domain controllers: a front-domain controller 220, a left-domain controller 230, and a right-domain controller 240. The three domain controllers are in a one-to-one correspondence with the three domains. Each domain controller is configured to obtain status information of the domain, and send the status information of the domain to the central controller.

For example, the domain controller may obtain the status information of the domain in the following manner: The domain controller may communicate with an intra-domain actuator and/or a sensor in a wired or wireless manner, to obtain the status information of the domain. For example, the front-domain controller 220 may perform data processing by using information such an amount of rain collected by a sensitive element of a wiper blade, to determine information about an operating status of the wiper blade, where the information about the operating status includes an operating frequency or an on/off status of the wiper blade. For another example, the left-domain controller 230 and/or the right-domain controller 240 may perform data processing by using pressure information or fingerprint information obtained by a sensitive element of a door handle, to determine information about an open/closed status of a door, and the like.

The central controller may receive the status information of the three domains, and generate a domain control signal based on the status information of the three domains, where the domain control signal is used to control an operating status of at least one of the three domains. For example, the central controller 210 may generate a control signal 1 (an example of the domain control signal) based on the received information such as the operating frequency or the on/off status of the wiper blade and the amount of rain. The control signal 1 may be used to control the operating status of the wiper blade, that is, control the wiper blade to be automatically enabled or disabled and to adjust the operating frequency depending on the amount of rain. The central controller 210 may send the control signal 1 to the front-domain controller 220, so that the front-domain controller 220 drives the wiper blade to operate based on specified operating logic. For another example, the central controller 210 may generate a control signal 2 (another example of the domain control signal) based on the information about the open/closed status of the door. The control signal 2 may be used to control an operating status of the door, that is, control the door to unlock or lock. The central controller 210 may send the control signal 2 to the left-domain controller 230 and/or the right-domain controller 240, so that the left-domain controller 230 and/or the right-domain controller 240 may drive the door to unlock or lock.

The central controller may include a communications interface T1 (an example of a first central communications interface), a communications interface T2 (another example of the first central communications interface), and a communications interface T3 (still another example of the first central communications interface). The front-domain controller 220 includes a communications interface A1 (an example of a first domain communications interface), the left-domain controller 230 includes a communications interface A2 (another example of the first domain communications interface), and the right-domain controller 240 includes a communications interface A3 (still another example of the first domain communications interface). The communications interface T1 and the communications interface A1 may form a communications interface pair #1 through which the central controller 210 and the front-area controller 220 may communicate with each other. The communications interface T2 and the communications interface A2 may form a communications interface pair #2 through which the central controller 210 and the left-area controller 230 may communicate with each other. The communications interface T3 and the communications interface A3 may form a communications interface pair #3 through which the central controller 210 and the right-area controller 240 may communicate with each other.

In addition, the front-domain controller 220 further includes a communications interface B1 (an example of a second domain communications interface), the left-domain controller 230 further includes a communications interface B2 (an example of the second domain communications interface), and the front-domain controller 220 and the left-domain controller 230 may communicate with each other through the communications interfaces B 1 and B2.

For ease of illustration, a communications link between the communications interface B1 and the communications interface B2 is referred to as a B1-B2 link below. It should be understood that the B1-B2 link is a bidirectional communications link. In other words, the left-domain controller 230 may transmit information to the front-domain controller 220 over the B1-B2 link, and the front-domain controller 220 may also transmit information to the left-domain controller 230 via the B1-B2 link.

In the control system 200 shown in FIG. 2, two layers of communications networks are formed between the central controller 210, the front-domain controller 220, and the left-domain controller 230. In other words, communication between the central controller 210 and the front-domain controller 220 may be implemented through the communications interface pair #1, or implemented through the communications interface pair #2 and the B1-B2 link, thereby forming communication redundancy.

Therefore, according to the control system provided in this embodiment of this application, communication redundancy can be formed between the central controller of the vehicle and the at least two domain controllers, so that when a communication fault occurs in any one layer of communications network, communication between the central controller and the at least two domain controllers can be implemented through another layer of communications network. This improves security of the control system for the vehicle.

It should be understood that the foregoing description is provided by using an example in which the front-domain controller 220 and the left-domain controller 230 each include one second domain communications interface. However, this application is not limited thereto. Optionally, the front-domain controller 220 and the right-domain controller 240 may include second domain communications interface B6 and B5, respectively. Alternatively, the left-domain controller 230 and the right-domain controller 240 include second domain communications interfaces B3 and B4, respectively. Similarly, both a B3-B4 link and a B5-B6 link may be bidirectional communications links.

Optionally, each of the plurality of domain controllers may include two second domain communications interfaces, and each of the plurality of domain controllers is connected to two different domain controllers through the second domain communications interfaces. In other words, in a possible implementation, a ring communications link may be formed between the plurality of domain controllers through the second domain communications interfaces, where the ring communications link includes a plurality of nodes, and each of the plurality of domain controllers forms one node in the plurality of nodes.

FIG. 2 is still used as an example for description. In FIG. 2, optionally, the front-domain controller 220 further includes a communications interface B6 (an example of the second domain communications interface), the left-domain controller 230 further includes a communications interface B3 (an example of the second domain communications interface), and the right-domain controller 240 further includes a communications interface B4 (an example of the second domain communications interface) and a communications interface B5 (an example of the second domain communications interface). The front-domain controller 220, the left-domain controller 230, and the right-domain controller 240 may form a ring communications link through the B1-B2 link, the B3-B4 link, and the B5-B6 link. The front-domain controller 220, the left-domain controller 230, and the right-domain controller 240 each form one node in three nodes in the ring communications link.

In other words, each domain controller includes two second domain communications interfaces, which are respectively connected to two different domain controllers. In this way, a ring communications link is formed in the control system 200.

Therefore, according to the control system for the vehicle provided in this embodiment of this application, each of the central controller and the plurality of domain controllers are included in at least two layers of communications networks, that is, communication redundancy is formed. This ensures security of the vehicle.

In addition, according to the control system provided in this embodiment of this application, a starring network architecture may be formed with connections between the first central communications interface of the central controller and the first domain communications interface and the second domain communications interface of the plurality of domain controllers. This ensures security of the control system for the vehicle, and simplifies wiring of an electronic and electrical architecture of the vehicle.

Optionally, each of at least two domain controllers in the plurality of domain controllers may include one second domain communications interface, and the two domain controllers each are connected to one domain controller through the respective second domain communications interface, so that the plurality of domain controllers are connected to form a chain communications link through the second domain communications interfaces. In other words, in a possible implementation, the chain communications link may be formed between the plurality of domain controllers through the second domain communications interfaces, where the chain communications link includes a plurality of nodes, and each of the plurality of domain controllers forms one node in the plurality of nodes.

In FIG. 2, optionally, the front-domain controller 220 may include the communications interface B 1 but does not include the communications interface B6, the left-domain controller 230 may include the communications interfaces B2 and B3, and the right-domain controller 240 may include only the communications interface B4 but does not include the communications interface B5. The front-domain controller 220, the left-domain controller 230, and the right-domain controller 240 may form a chain communication link through the B1-B2 link and the B3-B4 link. The front-domain controller 220, the left-domain controller 230, and the right-domain controller 240 each form one node in the three nodes in the chain communications link.

It should be understood that, in this case, each of the central controller and the plurality of domain controllers may still be included in two layers of communications networks, that is, communication redundancy is formed. This ensures security of the vehicle.

It should be further understood that in this application, when any two links of the B 1-B2 link, the B3-B3 link, and the B5-B6 link are connected, a chain communications link is formed between the three domain actuators. This is not limited in this application.

Therefore, according to the control system provided in this embodiment of this application, the plurality of domain controllers form the chain communications link through the second domain communications interfaces. With reference to the beneficial effects that can be brought by the starring network architecture formed between the central controller and the plurality of domain controllers, the chain communications link can ensure that communication redundancy exists in the control system for the vehicle, and make wiring of the electronic and electrical architecture less costly.

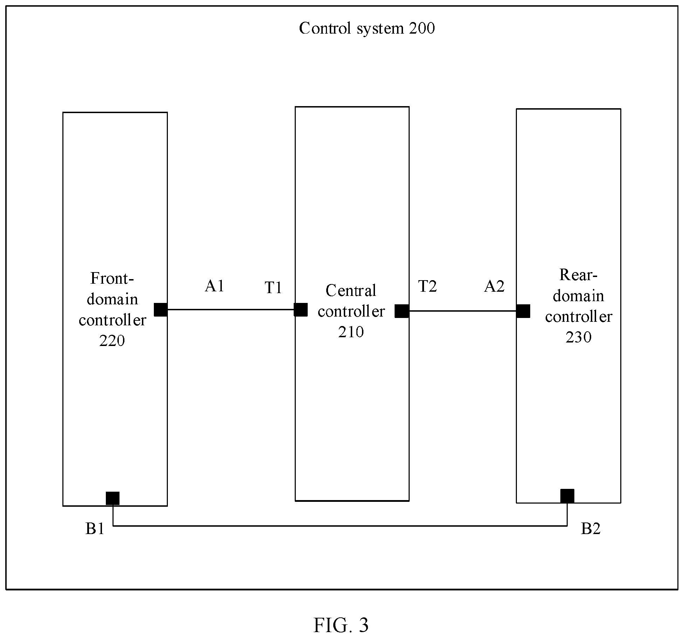

Optionally, the vehicle may alternatively be divided into a front domain and a rear domain, and the control system 200 may include a central controller 210 and two domain controllers, namely, a front-domain controller 220 and a rear-domain controller 230. The two domain controllers are in a one-to-one correspondence with the two domains. As an example, a schematic block diagram of the control system 200 consisting of a central controller and two domain controllers may be described in FIG. 3.

In FIG. 3, the central controller includes a communications interface T1 (an example of a first central communications interface) and a communications interface T2 (another example of the first central communications interface), the front-domain controller 220 includes a communications interface A1 (an example of a first domain communications interface), and the rear-domain controller 230 includes a communications interface A2 (an example of the first domain communications interface). The communications interface T1 and the communications interface A1 may form a communications interface pair #1 through which the central controller 210 and the front-domain controller 220 may communicate with each other. The communications interface T2 and the communications interfaces A2 may form a communications interface pair #2 through which the central controller 210 and the rear-domain controller 220 may communicate with each other.

In addition, in FIG. 3, the front-domain controller 220 may further include a communications interface B 1, and the rear-domain controller 230 may further include a communications interface B2, where both B 1 and B2 are examples of the second domain communications interface. The front-domain controller 220 and the rear-domain controller 230 may form a chain communications link through a B 1-B2 link.

Therefore, according to the control system provided in this embodiment of this application, communication redundancy can be formed between the central controller of the vehicle and the at least two domain controllers, so that when a communication fault occurs in any one layer of communications network, communication between the central controller and the at least two domain controllers can be implemented through another layer of communications network. This improves security of the control system for the vehicle.

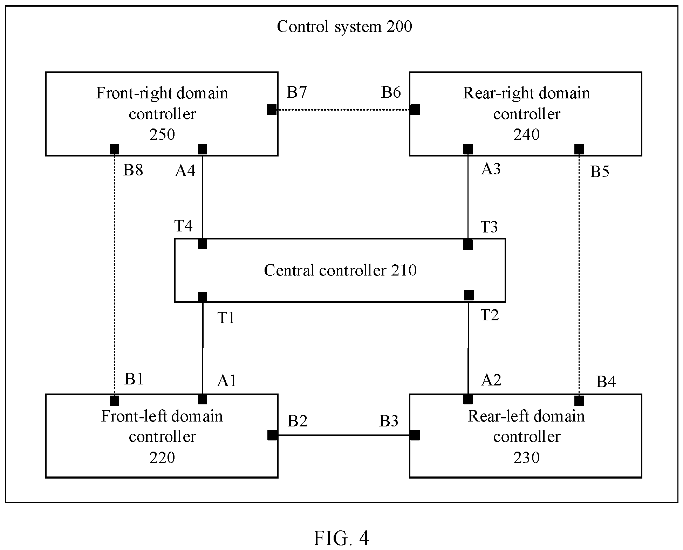

Optionally, the vehicle may alternatively be divided into four domains: a front-left domain, a rear-left domain, a front-right domain, and a rear-right domain. The control system 200 may include a central controller 210 and four domain controllers: a front-left domain controller 220, a rear-left domain controller 230, a front-right domain controller 250, and a right-rear domain controller 240. The four domain controllers are in a one-to-one correspondence with the four domains. As an example, a schematic block diagram of the control system 200 consisting of a central controller and four domain controllers may be described in FIG. 4.

As shown in FIG. 4, the central controller includes communications interfaces T1, T2, T3, and T4, and the communications interfaces T1, T2, T3, and T4 are all examples of a first central communications interface. The front-left domain controller 220, the rear-left domain controller 230, the rear-right domain controller 240, and the front-right domain controller 250 respectively include communications interfaces A1, A2, A3, and A4. The communications interfaces A1, A2, A3, and A4 are examples of a first domain communications interface. Similarly, a communications interface pair #1 (T1-A1), a communications interface pair #2 (T2-A2), a communications interface pair #3 (T3-A3), and a communications interface pair #4 (T4-A4) may be formed, respectively for communication between the central controller and each of the four domain actuators.

In addition, the front-left domain controller 220 and the rear-left domain controller 230 further include communications interfaces B2 and B3 respectively, and both B2 and B3 are examples of a second domain communications interface.

Therefore, according to the control system provided in this embodiment of this application, communication redundancy can be formed between the central controller of the vehicle and the at least two domain controllers, so that when a communication fault occurs in any one layer of communications network, communication between the central controller and the at least two domain controllers can be implemented through another layer of communications network. This improves security of the control system for the vehicle.

Similar to the control system in FIG. 2, in the control system shown in FIG. 4, the front-left domain controller 220 may further include a communications interface B 1, the rear-left domain controller 230 may further include a communications interface B4, the rear-right domain controller 230 may further include communications interfaces B5 and B6, and the front-right domain controller 250 may further include communications interfaces B7 and B8. The communications interfaces B1, B2, B3, B4, B5, B6, B7, and B8 are all examples of the second domain communications interface. Therefore, the front-left domain controller 220, the rear-left domain controller 230, the rear-right domain controller 240, and the front-right domain controller 250 may form a ring communications link through a B2-B3 link, a B4-B5 link, a B6-B7 link, and a B8-B 1 link.

Alternatively, any two or three links of the B2-B3 link, the B4-B5 link, the B6-B7 link, and the B1-B8 link may alternatively form a chain communications link. Alternatively, in the control system shown in FIG. 4, only the B2-B3 link and the B6-B7 link are included, or only the B4-B5 link and the B1-B8 link are included, to form two chain communications links.

It should be understood that, in this embodiment of this application, a specific quantity of a plurality of domain controllers and a quantity of communications interfaces of each of the plurality of domain controllers are not limited. In other words, a connection manner between the plurality of domain controllers is not limited in this embodiment of this application, provided that at least two of the plurality of domain controllers may form at least two layers of communications networks, that is, communication redundancy is formed.

It should be further understood that, in this application, the chain communications link refers to one or more non-closed lines between the communications interfaces.

It should be further understood that functions of the plurality of domain actuators and the central controller are irrelevant to a quantity of domain actuators and a connection manner between the plurality of domain actuators. Specific functions of each of the plurality of domain actuators and the central controller are not limited in this embodiment of this application.

It should be understood that, in this embodiment of this application, the first central communications interface and the first domain communications interface may have a same type or have different types. In other words, instances of communications interface pairs formed by the first central communications interfaces and the first domain communications interfaces may have a same interface type or have different interface types. As an example, both the first central communications interface and the first domain communications interface may be Ethernet interfaces. In other words, the central controller and each domain controller may exchange information through the Ethernet.

Optionally, the central controller and each domain controller may exchange information through an optical fiber, a controller area network with a flexible data rate (CAN FD) bus, or the like. Specific forms of the first central communications interface and the first domain communications interface may be determined according to a communication mode between the central controller and the domain controller. This is not limited in this application. It should be noted that, to ensure an efficient communication objective of an electronic and electrical architecture, a network delay may be controlled to be less than or equal to 1 ms.

It should be noted that a communication mode between the central controller and the first domain controller may be the same as or different from a communication mode between the central controller and the second domain controller. Both the first domain controller and the second domain controller are any one of the at least two domain controllers.

Similarly, a specific form of the second domain communications interface may be determined based on a communication mode between the plurality of domain controllers.

It should be understood that locations of the domain controllers in FIG. 2 to FIG. 4 in the vehicle are merely used as examples, and do not constitute a limitation in this embodiment of this application.

In a possible implementation, the central controller further includes a plurality of first power source interfaces, each of the plurality of domain controllers further includes a second power source interface, and the plurality of first power source interfaces and a plurality of second power source interfaces form a plurality of power source interface pairs. The central controller performs electrical energy transmission with the plurality of domain controllers through the plurality of power source interface pairs respectively. In addition, each of at least two domain controllers in the plurality of domain controllers further includes a third power source interface, and the at least two domain controllers perform electrical energy transmission with each other through the third power source interfaces.

In this embodiment of this application, the plurality of first power source interfaces and the plurality of second power source interfaces form the plurality of power source interface pairs between the central controller and the plurality of domain controllers. Then the central controller may perform electrical energy transmission with the plurality of domain controllers through the plurality of power source interface pairs respectively. In this way, a first layer of electrical energy network may be formed between the central controller and the plurality of domain controllers. Each of at least two domain controllers in the plurality of domain controllers further includes the third power source interface, and the at least two domain controllers may perform electrical energy transmission with each other through the third power source interfaces, so that a second layer of electrical energy network may be formed between the at least two domain controllers.

Therefore, according to the control system provided in this embodiment of this application, electrical energy redundancy can be formed between the central controller of the vehicle and the at least two domain controllers, so that when a fault occurs in electrical energy transmission in any one layer of electrical energy network, electrical energy communication between the central controller and the at least two domain controllers can be implemented through another layer of electrical energy network. This improves security of the control system for the vehicle.

In addition, according to the control system provided in this embodiment of this application, a starring network architecture may be formed with connections between the first power source interface of the central controller and the second power source interface and the third power source interface of the plurality of domain controllers. This ensures security of the control system for the vehicle, and simplifies wiring of the electronic and electrical architecture of the vehicle.

The following continues to provide description by using the example in which the vehicle is divided into three domains, that is, the control system 200 includes the central controller 210, the front-domain controller 220, the left-domain controller 230, and the right-domain controller 240.

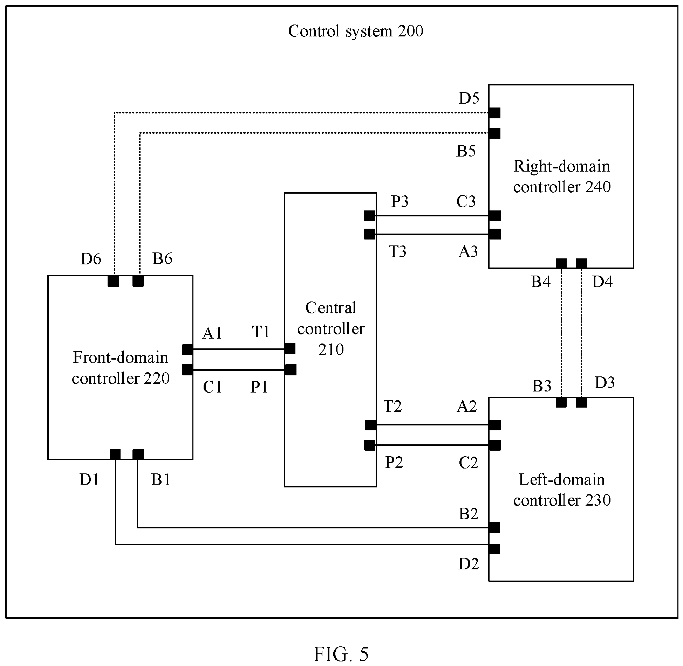

FIG. 5 is another schematic block diagram of a control system for a vehicle according to an embodiment of this application. As shown in FIG. 5, based on FIG. 2, the central controller 210 may further include a power source interface P1 (an example of a first power source interface), a power source interface P2 (another example of the first power source interface), and a power source interface P3 (still another example of the first power source interface). The front-domain controller 220 may further include a power source interface Cl (an example of a second power source interface). The left-domain controller 230 may further include a power source interface C2 (an example of the second power source interface). The right-domain controller 240 may further include a power source interface C3 (an example of the second power source interface). The power source interfaces P1 and C1 may form a power source interface pair #1 through which the central controller 210 and the front-domain controller 220 may perform electrical energy transmission with each other. The power interfaces P2 and C2 may form a power source interface pair #2 through which the central controller 210 and the left-domain controller 230 may perform electrical energy transmission with each other. The power source interfaces P3 and C3 may form a power source interface pair #3 through which the central controller 210 and the right-domain controller 240 may perform electrical energy transmission with each other.

Further, the front-domain controller 220 further includes a power source interface D1 (an example of a third power source interface), and the left-domain controller 230 further includes a power source interface D2 (an example of the third power source interface). The front-domain controller 220 and the left-domain controller 230 may perform electrical energy transmission with each other through the power source interfaces D1 and D2.

For ease of illustration, an electrical energy link between the power source interface D1 and the power source interface D2 is referred to as a D1-D2 link below. It should be understood that the D1-D2 link is a bidirectional electrical energy link. In other words, the left-domain controller 230 may transmit electrical energy to the front-domain controller 220 via the D1-D2 link, and the front-domain controller 220 may also transmit electrical energy to the left-domain controller 230 via the D1-D2 link. It should be noted that a specific function of the bidirectional electrical energy link may be implemented through a control circuit in the domain controller.

In the control system 200 shown in FIG. 5, two layers of electrical energy networks are formed between the central controller 210, the front-domain controller 220, and the left-domain controller 230. In other words, electrical energy can be transmitted between the central controller 210 and the front-domain controller 220 through the power source interface pair #1, or through the power source interface pair #2 and the D1-D2 link, thereby forming electrical energy redundancy.

Therefore, according to the control system provided in this embodiment of this application, electrical energy redundancy can be formed between the central controller of the vehicle and the at least two domain controllers, so that when a fault occurs in electrical energy transmission in any one layer of electrical energy network, electrical energy communication between the central controller and the at least two domain controllers can be implemented through another layer of electrical energy network. This improves security of the control system for the vehicle.

It should be understood that the foregoing description is provided by using an example in which the front-domain controller 220 and the left-domain controller 230 each include one third power source interface. However, this application is not limited thereto. Optionally, the front-domain controller 220 and the right-domain controller 240 may include third power source interfaces D6 and D5, respectively. Alternatively, the left-domain controller 230 and the right-domain controller 240 include third power source interfaces D3 and D4, respectively. Similarly, both a D3-D4 link and a D5-D6 link may be bidirectional communications links.

It should be understood that, in this embodiment of this application, interface types of the first power source interface and the second power source interface may be the same, or may be different. In other words, instances of power source interface pairs formed by the first power source interface and the second power source interface may be connectors of a same model, or connectors of different models. A specific form is related to information such as a magnitude of a transmission current between the domain controller and the central controller. This is not limited in this embodiment of this application. Similarly, a specific form of the third power source interface may be determined based on information such as a magnitude of a transmission current between the plurality of domain controllers.

It should be noted that a magnitude of a transmission current between the central controller and the first domain controller or the like may be the same as a magnitude of a transmission current between the central controller and the second domain controller or the like, or may be different. Both the first domain controller and the second domain controller are any one of the at least two domain controllers.

Optionally, each of the plurality of domain controllers may include two third power source interfaces, and each of the plurality of domain controllers is connected to two different domain controllers through the third power source interfaces. In other words, in a possible implementation, a ring electrical energy link may be formed between the plurality of domain controllers through the third power source interfaces, where the ring electrical energy link includes a plurality of nodes, and each of the plurality of domain controllers forms one node in the plurality of nodes.

FIG. 5 is still used as an example for description. In FIG. 5, optionally, the front-domain controller 220 further includes the power source interface D6 (an example of the third power source interface), the left-domain controller 230 further includes the power source interface D3 (an example of the third power source interface), and the right-domain controller 240 further includes the power source interface D4 (an example of the third power source interface) and the power source interface D5 (an example of the third power source interface).

The front-domain controller 220, the left-domain controller 230, and the right-domain controller 240 may form a ring electrical energy link through the D1-D2 link, the D3-D4 link, and the D5-D6 link. The front-domain controller 220, the left-domain controller 230, and the right-domain controller 240 each constitute one of the three nodes in the ring electrical energy link.

In other words, each domain controller includes two third power source interfaces, which are respectively connected to two different domain controllers. In this way, a ring electrical energy link is formed in the control system 200.

Therefore, according to the control system for the vehicle provided in this embodiment of this application, each of the central controller and the plurality of domain controllers are included in two layers of electrical energy networks, that is, electrical energy redundancy is formed. This ensures security of the vehicle.

In addition, according to the control system provided in this embodiment of this application, a starring network architecture may be formed with connections between the first power source interface of the central controller and the second power source interface and the third power source interface of the plurality of domain controllers. This ensures security of the control system for the vehicle, and simplifies wiring of an electronic and electrical architecture of the vehicle.

Optionally, each of at least two domain controllers in the plurality of domain controllers may include one third power source interface, and the two domain controllers are connected to one domain controller through the respective third power source interface, so that the plurality of domain controllers are connected to form a chain electrical energy link. In other words, in a possible implementation, the chain electrical energy link is formed between the plurality of domain controllers through the third power source interfaces, where the chain electrical energy link includes a plurality of nodes, and each of the plurality of domain controllers forms one node in the plurality of nodes.

FIG. 5 is still used as an example for description. In FIG. 5, optionally, the front-domain controller 220 may include the power source interface D1 but not include the power source interface D6, the left-domain controller 230 may include the power source interfaces D2 and D3, and the right-domain controller 240 may include only the power source interface D4 but not include the power source interface D5.

The front-domain controller 220, the left-domain controller 230, and the right-domain controller 240 may form a chain electrical energy link through the D1-D2 link and the D3-D4 link. The front-domain controller 220, the left-domain controller 230, and the right-domain controller 240 each constitute one of the three nodes in the chain electrical energy link.

It should be understood that, in this case, each of the central controller and the plurality of domain controllers may still be included in two layers of electrical energy networks, that is, electrical energy redundancy is formed. This ensures security of the vehicle.

It should be further understood that in this application, when any two links of the D1-D2 link, the D3-D4 link, and the D5-D6 link are connected, a chain electrical energy link is formed between the three domain actuators. This is not limited in this application.

Therefore, according to the control system provided in this embodiment of this application, the plurality of domain controllers form the chain electrical energy link through the third power source interfaces. With reference to the beneficial effects that can be brought by the starring network architecture formed between the central controller and the plurality of domain controllers, the chain electrical energy link can ensure that electrical energy redundancy exists in the control system for the vehicle, and make wiring of the electronic and electrical architecture less costly.

In a possible implementation, at least one of the plurality of domain controllers further includes a first power supply interface, and the first power supply interface is configured to obtain electrical energy from a battery pack and/or a battery of the vehicle.

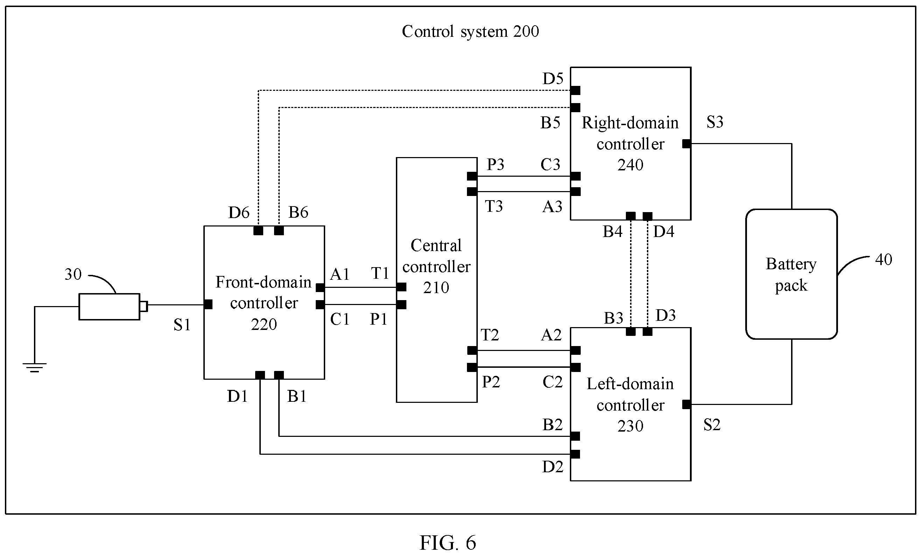

FIG. 6 is still another schematic block diagram of a control system for a vehicle according to an embodiment of this application. As shown in FIG. 6, the front-domain controller 220 may further include a power source interface S1 (an example of the first power supply interface), the left-domain controller 230 may further include a power source interface S2 (an example of the first power supply interface), and the right-domain controller 240 may further include a power source interface S3 (an example of the first power supply interface). The front-domain controller 220 may obtain electrical energy from a battery 30 of the vehicle through the power source interface S1, and the left-domain controller 230 and the right-domain controller 240 may obtain electrical energy from a battery pack 40 of the vehicle respectively through the power source interface S2 and the power source interface S3.

Optionally, the front-domain controller 220 may alternatively obtain electrical energy from the battery pack 40 of the vehicle through the power source interface S1, and the left-domain controller 230 and the right-domain controller 240 may alternatively obtain electrical energy from the battery 30 of the vehicle respectively through the power source interface S2 and the power source interface S3. This is not limited in this embodiment of this application.

Optionally, the front-domain controller 220 may further include two first power supply interfaces that are configured to obtain electrical energy from the battery 30 and the battery pack 40 of the vehicle respectively. The left-domain controller 230 and the right-domain controller 240 each may include two power source interfaces that are configured to obtain electrical energy from the battery 30 and the battery pack 40 of the vehicle respectively. A quantity of first power supply interfaces included in the domain controller and a specific manner of obtaining electrical energy are not limited in this embodiment of this application.

Therefore, according to the control system for the vehicle provided in this embodiment of this application, at least one of the plurality of domain controllers may obtain electrical energy from the battery pack and/or the battery of the vehicle, and further supply power to another component in the vehicle. This ensures security of the control system for the vehicle. The other components may include at least one of another domain controller, a central controller, an intra-domain sensor, and an actuator.

It should be understood that, when power needs to be obtained from the storage battery 30, the first power supply interface of the domain controller may be connected to a cathode of the battery 30 by using a power cable, and an anode of the battery 30 may be connected to ground.

In a possible implementation, the central controller may include a second power supply interface, and the second power supply interface is configured to obtain electrical energy from the battery pack and/or the battery of the vehicle.

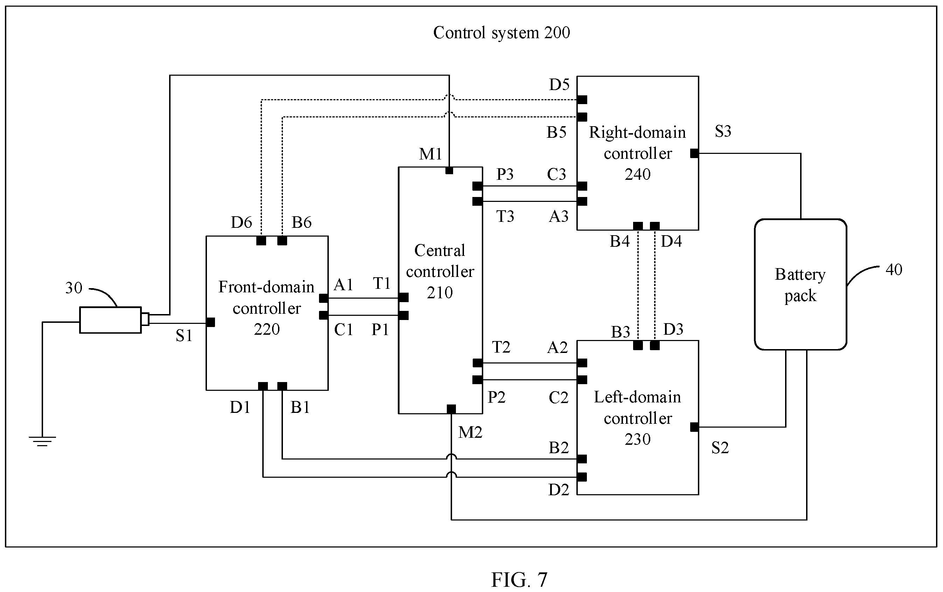

FIG. 7 is yet another schematic block diagram of a control system for a vehicle according to an embodiment of this application. As shown in FIG. 7, the central controller 210 may further include a power source interface M1 and/or a power source interface M2 (an example of the second power supply interface). The central controller 210 may obtain electrical energy from the battery 30 of the vehicle through the power source interface M1, and obtain electrical energy from the battery pack 40 of the vehicle through the power source interface M2.

Optionally, the central controller 210 may obtain electrical energy from the battery pack 40 of the vehicle through the power source interface M1, and obtain electrical energy from the battery 30 of the vehicle through the power source interface M2. This is not limited in this embodiment of this application.

Therefore, according to the control system for the vehicle provided in this embodiment of this application, the central controller may obtain electrical energy from the battery pack and/or the battery of the vehicle, and further supply power to another component the vehicle. This ensures security of the control system for the vehicle. The other components may include a plurality of domain controllers, an intra-domain sensor, and an actuator.

It should be noted that, in the control system 200 in this embodiment of this application, any one of the central controller and the plurality of domain actuators are in equal positions in terms of electrical energy transmission. In other words, if one domain controller can obtain electrical energy, the domain actuator may be understood as a power distribution center, and supplies power to another component. If the central controller can obtain electrical energy, the central controller may be understood as a power distribution center, and supplies power to another component.

In a possible implementation, each of the plurality of domain controllers may further include a fourth power source interface, and each of the plurality of domain controllers performs electrical energy transmission with an intra-domain actuator and/or a sensor of each domain controller through the fourth power source interface.

In other words, in the control system 200 shown in FIG. 5 to FIG. 7, each of the plurality of domain controllers may alternatively be connected to an intra-domain actuator and/or a sensor through the fourth power source interface, and transmit electrical energy to the intra-domain actuator and/or the sensor through the fourth power source interface. For example, the obtained electrical energy may be supplied to the intra-domain actuator and/or the sensor through the fourth power source interface. As an example, the fourth power source interface may be an H-bridge driver interface, a high-side driver interface, or a low-side driver interface.

In a possible implementation, each of the plurality of domain controllers further includes a third domain communications interface, and each of the plurality of domain controllers communicates with the intra-domain actuator and/or the sensor of each domain controller through the third domain communications interface.

In other words, in the control system 200 shown in FIG. 2 to FIG. 7, each of the plurality of domain controllers may alternatively be connected to the intra-domain actuator and/or the sensor through the third domain communications interface, and communicates with the intra-domain actuator and/or the sensor through the third domain communications interface. For example, a domain control signal may be sent to the intra-domain actuator and/or the sensor through the third domain communications interface, to control operating statuses of a plurality of domains in the vehicle. Alternatively, status information of the plurality of domains in the vehicle may be obtained through the third domain communications interface. For example, any one of the domain controllers may be connected to the intra-domain actuator and/or the sensor through a controller area network (CAN) bus or a local interconnect network (LIN) and an input/output (I/O) hard wire. The third domain communications interface may be a communications interface of the CAN bus, a communications interface of the LIN, and/or an I/O interface.

In a possible implementation, the central controller further includes a first extensible interface, and the first extensible interface is configured to connect to a computing device and/or a storage device.

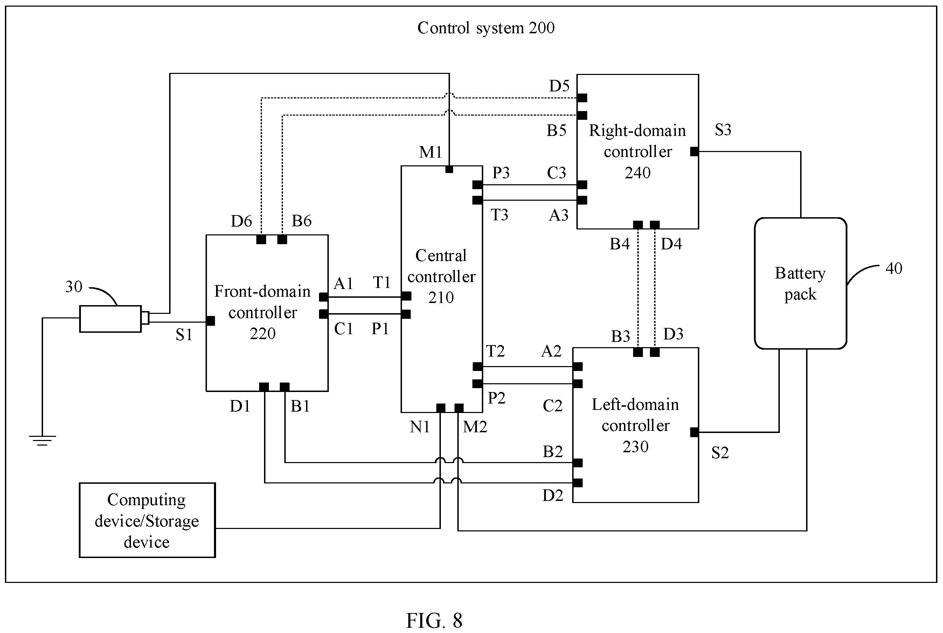

FIG. 8 is still yet another schematic block diagram of a control system for a vehicle according to an embodiment of this application. As shown in FIG. 8, the central controller 210 may further include an input/output (I/O) interface N1 (an example of the first extensible interface). The central controller 210 may be connected to an external computing device and/or a storage device through the I/O interface N1. In this way, a computing capability and/or storage space of the central controller can be expanded. As an example, the I/O interface N1 may be in a form of a connector or a form of a card slot, and the computing device or the storage device or both may be standard additional circuit boards with a controller. Serving as an extension resource of the central controller, a master control chip on the circuit board shares computing load of the central controller and load of data storage. In addition, the standard additional circuit board may further be used to increase a quantity of I/O interfaces on the main control board.

According to the control system for the vehicle provided in this embodiment of this application, the central controller includes the extensible I/O interface, so that a computing capability and a storage capability of the control system can be more conveniently expanded in the vehicle. Therefore, the vehicle control system has strong scalability, and hardware of the vehicle is easy to upgrade and maintain, which is comparatively flexible.

Similarly, at least one of the plurality of domain controllers may further include a second extensible interface, and the second extensible interface is configured to connect to the computing device and/or the storage device. In other words, an external device may be connected through the second extensible interface, to expand a signal processing capability and/or storage space of the domain controller.

It should be emphasized that, in this embodiment of this application, the first extensible interface and the second extensible interface may be the same or different. A specific case may be determined based on an actual application environment. This is not limited in this application.

It should be further understood that the interface included in the control system 200 in this application may be any combination of the following interfaces: the second domain communications interface, the first power source interface, the second power source interface, the third power source interface, the first power supply interface, the second power supply interface, the fourth power source interface, the third domain communications interface, the first extensible interface, and the second extensible interface. A specific combination may be determined based on an actual application environment. This is not limited in this embodiment of this application.

In a possible implementation, the first central communications interface and the first power source interface in FIG. 5 to FIG. 8 may be combined into one interface. In other words, the interface may be used for information exchange and electrical energy transmission. For example, the communications interface T1 and the power source interface P1 may be a same interface. Similarly, the first domain communications interface and the second power source interface may also be combined into one interface, the second domain communications interface and the third power source interface may be combined into one interface, and the third domain communications interface and the fourth power source interface may be combined into one interface. In other words, the interfaces each may be used for information exchange and electrical energy transmission. For example, the communications interface A1 and the power source interface C1 may be a same interface, and the communications interface B1 and the power source interface D1 may be a same interface. In this case, a type of the interface is determined based on an actual application environment. This is not limited in this application.

In a possible implementation, an embodiment of this application provides a control system for a vehicle. The control system includes a plurality of domain controllers and a central controller. The vehicle may include a plurality of domains, and the plurality of domain controllers are in a one-to-one correspondence with the plurality of domains. The plurality of domain controllers are configured to respectively obtain status information of the plurality of domains, and send the status information of the plurality of domains to the central controller. The central controller is configured to receive the status information of the plurality of domains from the plurality of domain controllers, and generate a domain control signal based on the status information of the plurality of domains, where the domain control signal is used to control operating statuses of the plurality of domains. The central controller includes a plurality of first power source interfaces, each of the plurality of domain controllers includes a second power source interface, the plurality of first power source interfaces and a plurality of second power source interfaces form a plurality of power source interface pairs, and the central controller performs electrical energy transmission with the plurality of domain controllers through the plurality of power source interface pairs respectively. In addition, each of at least two domain controllers in the plurality of domain controllers further includes a third power source interface, and the at least two domain controllers perform electrical energy transmission with each other through the third power source interfaces.

In this embodiment of this application, the plurality of first power source interfaces and the plurality of second power source interfaces form the plurality of power source interface pairs between the central controller and the plurality of domain controllers. Then the central controller may perform electrical energy transmission with the plurality of domain controllers through the plurality of power source interface pairs respectively. In this way, a first layer of electrical energy network may be formed between the central controller and the plurality of domain controllers. Each of at least two domain controllers in the plurality of domain controllers further includes the third power source interface, and the at least two domain controllers may perform electrical energy transmission with each other through the third power source interfaces, so that a second layer of electrical energy network may be formed between the at least two domain controllers. Therefore, according to the control system provided in this embodiment of this application, electrical energy redundancy can be formed between the central controller of the vehicle and the at least two domain controllers, so that when a fault occurs in electrical energy transmission in any one layer of electrical energy network, electrical energy transmission between the central controller and the at least two domain controllers can be implemented through another layer of electrical energy network. This improves security of the control system for the vehicle.

In addition, according to the control system provided in this embodiment of this application, a starring network architecture may be formed with connections between the first power source interface of the central controller and the second power source interface and the third power source interface of the plurality of domain controllers. This ensures security of the control system for the vehicle, and simplifies wiring of an electronic and electrical architecture of the vehicle.

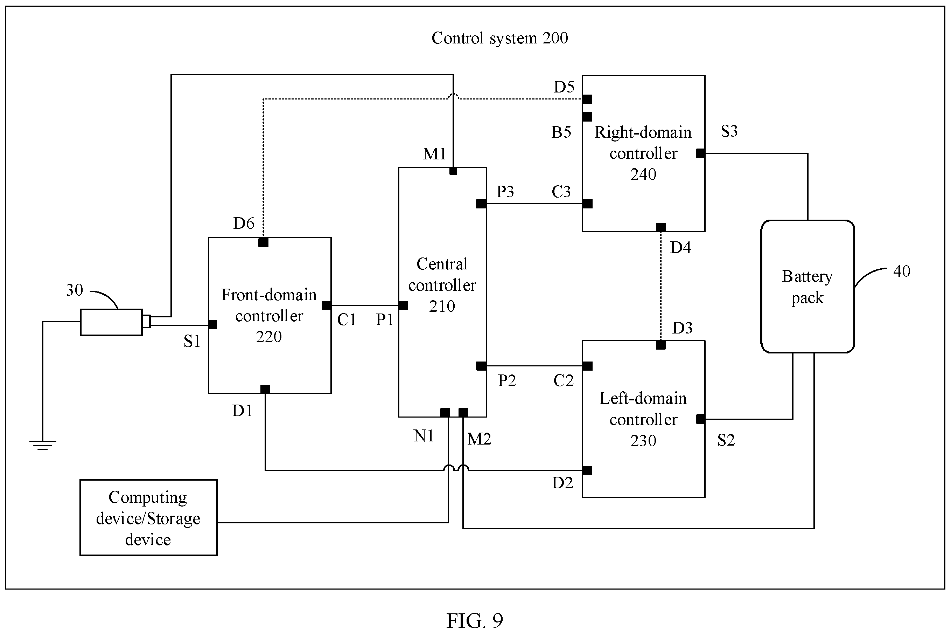

FIG. 9 is a further schematic block diagram of a control system 200 for a vehicle according to an embodiment of this application. As shown in FIG. 9, the central controller may further include a power source interface P1 (an example of a first power source interface), a power source interface P2 (another example of the first power source interface), and a power source interface P3 (still another example of the first power source interface). The front-domain controller 220 includes a power source interface C1 (an example of a second power source interface). The left-domain controller 230 includes a power source interface C2 (an example of the second power source interface). The right-domain controller 240 includes a power source interface C3 (an example of the second power source interface). The power source interfaces P1 and C1 may form a power source interface pair #1 through which the central controller 210 and the front-domain controller 220 may perform electrical energy transmission with each other. The power interfaces P2 and C2 may form a power source interface pair #2 through which the central controller 210 and the left-domain controller 230 may perform electrical energy transmission with each other. The power source interfaces P3 and C3 may form a power source interface pair #3 through which the central controller 210 and the right-domain controller 240 may perform electrical energy transmission with each other.

Further, the front-domain controller 220 further includes a power source interface D1 (an example of a third power source interface), and the left-domain controller 230 further includes a power source interface D2 (an example of the third power source interface). The front-domain controller 220 and the left-domain controller 230 may perform electrical energy transmission with each other through the power source interfaces D1 and D2.

In the control system 200 shown in FIG. 9, two layers of electrical energy networks are formed between the central controller 210, the front-domain controller 220, and the left-domain controller 230. In other words, electrical energy can be transmitted between the central controller 210 and the front-domain controller 220 through the power source interface pair #1, or through the power source interface pair #2 and the D1-D2 link, thereby forming electrical energy redundancy.

Therefore, according to the control system provided in this embodiment of this application, electrical energy redundancy can be formed between the central controller of the vehicle and the at least two domain controllers, so that when a fault occurs in electrical energy transmission in any one layer of electrical energy network, electrical energy communication between the central controller and the at least two domain controllers can be implemented through another layer of electrical energy network. This improves security of the control system for the vehicle.

It should be understood that the foregoing description is provided by using an example in which the front-domain controller 220 and the left-domain controller 230 each include one third power source interface. However, this application is not limited thereto. Optionally, the front-domain controller 220 and the right-domain controller 240 may include third power source interfaces D6 and D5, respectively. Alternatively, the left-domain controller 230 and the right-domain controller 240 include third power source interfaces D3 and D4, respectively.

Optionally, each of the plurality of domain controllers may include two third power source interfaces, and each of the plurality of domain controllers is connected to two different domain controllers through the third power source interfaces. In other words, in a possible implementation, a ring electrical energy link may be formed between the plurality of domain controllers through the third power source interfaces, where the ring electrical energy link includes a plurality of nodes, and each of the plurality of domain controllers forms one node in the plurality of nodes.

Therefore, according to the control system provided in this embodiment of this application, a starring network architecture may be formed with connections between the first power source interface of the central controller and the second power source interface and the third power source interface of the plurality of domain controllers. This ensures security of the control system for the vehicle, and simplifies wiring of an electronic and electrical architecture of the vehicle.

Optionally, each of at least two domain controllers in the plurality of domain controllers may include one third power source interface, and the two domain controllers are connected to one domain controller through the respective third power source interface, so that the plurality of domain controllers are connected to form a chain electrical energy link. In other words, in a possible implementation, the chain electrical energy link is formed between the plurality of domain controllers through the third power source interfaces, where the chain electrical energy link includes a plurality of nodes, and each of the plurality of domain controllers forms one node in the plurality of nodes.

Therefore, according to the control system provided in this embodiment of this application, the plurality of domain controllers form the chain electrical energy link through the third power source interfaces. With reference to the beneficial effects that can be brought by the starring network architecture formed between the central controller and the plurality of domain controllers, the chain electrical energy link can ensure that electrical energy redundancy exists in the control system for the vehicle, and make wiring of the electronic and electrical architecture less costly.

In a possible implementation, at least one of the plurality of domain controllers further includes a first power supply interface, and the first power supply interface is configured to obtain electrical energy from a battery pack and/or a battery of the vehicle.

In a possible implementation, the central controller further includes a second power supply interface, and the second power supply interface is configured to obtain electrical energy from the battery pack and/or the battery of the vehicle.

In a possible implementation, each of the plurality of domain controllers may further include a fourth power source interface, and each of the plurality of domain controllers performs electrical energy transmission with an intra-domain actuator and/or a sensor of each domain controller through the fourth power source interface.

In a possible implementation, the central controller further includes a first extensible interface, and the first extensible interface is configured to connect to a computing device and/or a storage device.

Similarly, at least one of the plurality of domain controllers may further include a second extensible interface, and the second extensible interface is configured to connect to the computing device and/or the storage device. In other words, an external device may be connected through the second extensible interface, to expand a signal processing capability and/or storage space of the domain controller.

It should be understood that, in the control system 200 in FIG. 9, for specific description of the following content: the third power source interface (D1, D2, D3, D4, D5, and D6 in FIG. 9), the first power supply interface (S1, S2, and S3 in FIG. 9), the second power supply interface (M1 and M2 in FIG. 9), the fourth power source interface, the first extensible interface (N1 in FIG. 9), the second extensible interface, the formed ring electrical energy link (the ring electrical energy link formed by the D1-D2 link, the D3-D4 link, and the D5-D6 link in FIG. 9), the chain electrical energy link (a chain electrical energy link formed by the D1-D2 link and the D3-D4 link, or the D3-D4 link and the D5-D6 link, or the D5-D6 link and the D1-D2 link in FIG. 9), and the like, refer to the foregoing description in FIG. 5 to FIG. 8. Details are not described herein again.

It should be understood that, an example in which a vehicle is divided into three domains is used for description in FIG. 5 to FIG. 9. However, a quantity of domains of the vehicle and an arrangement manner of each domain controller in the vehicle are not limited in embodiments of this application. The vehicle may be divided into Y domains, where Y is a positive integer greater than 1. The foregoing solution may be easily applicable to a control system including Y domain controllers.

An embodiment of this application further provides a vehicle, and the vehicle may include any one of the foregoing control systems 200.

It should be understood that, location relationships such as front, rear, left, right, front left, rear left, front right, rear left, and rear right described in embodiments of this application are relative concepts in space, and may alternatively be understood as locations approximate to front, rear, left, right, front left, rear left, front right, rear left, and rear right in a specific case.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the described system, apparatus, and unit, refer to a corresponding process in the foregoing method embodiments.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on this understanding, the technical solutions of this application essentially, or the part contributing to the prior art, or some of the technical solutions may be implemented in a form of a software product. The computer software product is stored in a storage medium, and includes several instructions for instructing a computer device (which may be, for example, a personal computer, a server, or a network device) to perform all or some of the steps of the methods described in embodiments of this application. The foregoing storage medium includes any medium that can store program code, such as a USB flash drive, a removable hard disk, a read-only memory (ROM), a random access memory (RAM), a magnetic disk, or an optical disc.

The foregoing description is merely a specific implementation of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control system (200) for a vehicle (100), comprising: a plurality of domain controllers (220, 230, 240) and a central controller (210), wherein
the plurality of domain controllers (220, 230, 240) are configured to respectively obtain status information of a plurality of domains and send the status information of the plurality of domains to the central controller (210), wherein the vehicle (100) comprises the plurality of domains, and the plurality of domain controllers (220, 230, 240) are in a one-to-one correspondence with the plurality of domains; and,
the central controller (210) is configured to receive the status information of the plurality of domains from the plurality of domain controllers (220, 230, 240), and generate a domain control signal based on the status information of the plurality of domains, wherein the domain control signal is used to control operating statuses of the plurality of domains, wherein the control system is **characterised in that**;
the central controller (210) comprises a plurality of first central communications interfaces (T1, T2, T3), each of the plurality of domain controllers (220, 230, 240) comprises a first domain communications interface (A1, A2, A3), the plurality of first central communications interfaces (T1, T2, T3) and a plurality of first domain communications interfaces (A1, A2, A3) form a plurality of communications interface pairs (T1-A1, T2-A2, T3-A3) wherein the plurality of communication interface pairs form a star network, such that the star network provides a first layer of a communications network between the central controller and the plurality of domain controllers, and the central controller (210) communicates with the plurality of domain controllers (220, 230, 240) through the first layer of the communications network; and
each of at least two domain controllers (220, 230, 240) in the plurality of domain (220, 230, 240) controllers further comprises a second domain communications interface (B1, B2, B3, B4, B5, B6) wherein the plurality of domain controllers (220, 230, 240) form a ring network through the second domain communications interfaces (B 1, B2, B3, B4, B5, B6), the ring network comprises a plurality of nodes, and each of the plurality of domain (220, 230, 240) controllers forms one node in the plurality of nodes, such that the second domain communication interfaces provide a second layer of the communications network between the at least two domain controllers, and the at least two domain controllers communicate (220, 230, 240) with each other through the second layer of the communications network; wherein
when a communication fault occurs in either the first or second layer of the communications network, communication between the central controller and the at least two domain controllers is implemented through the layer of the communications network which has not failed.

2. The control system according to claim 1, wherein the central controller (210) further comprises a plurality of first power source interfaces (P1, P2, P3), each of the plurality of domain controllers (220, 230, 240) further comprises a second power source interface (C1, C2, C3), the plurality of first power source interfaces (P1, P2, P3) and a plurality of second power source interfaces (C1, C2, C3) form a plurality of power source interface pairs wherein the plurality of power source interface pairs form a star network, such that the star network provides a first layer of an electrical energy network between the central controller and the plurality of domain controllers, and the central controller (210) performs electrical energy transmission with the plurality of domain controllers (220, 230, 240) through the first layer of the electrical energy network; and
each of at least two domain controllers (220, 230, 240) in the plurality of domain controllers (220, 230, 240) further comprises a third power source interface (D1, D2, D3, D4, D5, D6) wherein the plurality of domain controllers (220, 230, 240) form a ring network through the third power source interfaces (D1, D2, D3, D4, D5, D6), the ring network comprises a plurality of nodes, and each of the plurality of domain controllers (220, 230, 240) forms one node in the plurality of nodes, such that the ring network provides a second layer of the electrical energy network between the at least two domain controllers, and the at least two domain controllers (220, 230, 240) perform electrical energy transmission with each other through the second layer of the electrical energy network; wherein
when a fault occurs in the first or second layer of the electrical energy network, electrical energy transmission between the central controller and the at least two domain controllers is implemented through the layer which did not fail.

3. The control system according to claim 2, wherein at least one of the plurality of domain controllers (220, 230, 240) comprises a first power supply interface (S1), and the first power supply interface (S1) is configured to obtain electrical energy from a battery pack (30) and/or a battery of the vehicle (100).

4. The control system according to any one of claims 2 or 3, wherein the central controller (210) further comprises a second power supply interface (M1), and the second power supply interface (M1) is configured to obtain electrical energy from the battery pack and/or the battery (30) of the vehicle (100).

5. The control system according to any one of claims 2 to 4, wherein each of the plurality of domain controllers (220, 230, 240) further comprises a fourth power source interface, and each of the plurality of domain controllers performs electrical energy transmission with an intra-domain actuator and/or a sensor of each domain controller through the fourth power source interface.

6. A control system according to any of clams 2 to 5, wherein
the communication interface (T1) and the power source interface (P1) of the central controller are combined in one interface;
the first domain communication interfaces (A1) and the second power source (C1) interface of the domain controllers are combined in one interface; and
the third domain communications interface (B1) and the fourth power source interface (D1) be combined into one interface.

## Patentansprüche

1. Steuerungssystem (200) für ein Fahrzeug (100), umfassend:
eine Vielzahl von Domänensteuerungen (220, 230, 240) und eine zentrale Steuerung (210), wobei
die Vielzahl von Domänensteuerungen (220, 230, 240) so konfiguriert sind, dass sie jeweils Statusinformationen mehrerer Domänen erhalten und die Statusinformationen der Vielzahl von Domänen an die zentrale Steuerung (210) senden, wobei das Fahrzeug (100) die Vielzahl von Domänen umfasst und die Vielzahl von Domänensteuerungen (220, 230, 240) in einer Eins-zu-eins-Entsprechung mit der Vielzahl von Domänen steht; und,
die zentrale Steuerung (210) so konfiguriert ist, dass sie die Statusinformationen der Vielzahl von Domänen von der Vielzahl von Domänensteuerungen (220, 230, 240) empfängt und auf der Grundlage der Statusinformationen der Vielzahl von Domänen ein Domänensteuersignal erzeugt, wobei das Domänensteuersignal verwendet wird, um Betriebszustände der Vielzahl von Domänen zu steuern, wobei das Steuerungssystem gekennzeichnet, dass;
die zentrale Steuerung (210) eine Vielzahl erster zentraler Kommunikationsschnittstellen (T1, T2, T3) umfasst, jede der Vielzahl von Domänensteuerungen (220, 230, 240) eine erste Domänenkommunikationsschnittstelle (A1, A2, A3) umfasst, wobei die Vielzahl von ersten zentralen Kommunikationsschnittstellen (T1, T2, T3) und eine Vielzahl von ersten Domänenkommunikationsschnittstellen (A1, A2, A3) mehrere Kommunikationsschnittstellenpaare (T1-A1, T2-A2, T3-A3) bilden, wobei die Vielzahl von Kommunikationsschnittstellenpaaren ein Sternnetzwerk bilden, sodass das Sternnetzwerk eine erste Schicht eines Kommunikationsnetzwerks zwischen der zentralen Steuerung und der Vielzahl von Domänensteuerungen bereitstellt und die zentrale Steuerung (210) mit der Vielzahl von Domänensteuerungen ( 220, 230, 240) über die erste Schicht des Kommunikationsnetzwerks kommuniziert; und
jede von mindestens zwei Domänensteuerungen (220, 230, 240) in der Vielzahl von Domänensteuerungen (220, 230, 240) außerdem eine zweite Domänenkommunikationsschnittstelle (B1, B2, B3, B4, B5, B6) umfasst, wobei die Vielzahl von Domänensteuerungen (220, 230, 240) über die Kommunikationsschnittstellen der zweiten Domäne (B1, B2, B3, B4, B5, B6) ein Ringnetzwerk bilden, wobei das Ringnetzwerk eine Vielzahl von Knoten umfasst und jede der Vielzahl von Domänensteuerungen (220, 230, 240) einen Knoten in der Vielzahl von Knoten bildet, so dass die Kommunikationsschnittstellen der zweiten Domäne eine zweite Schicht des Kommunikationsnetzwerks zwischen den mindestens zwei Domänensteuerungen bereitstellen und die mindestens zwei Domänensteuerungen (220, 230, 240) untereinander über die zweite Schicht des Kommunikationsnetzwerks kommunizieren; wobei
wenn ein Kommunikationsfehler entweder in der ersten oder zweiten Schicht des Kommunikationsnetzwerks auftritt, die Kommunikation zwischen der zentralen Steuerung und den mindestens zwei Domänensteuerungen über die Schicht des Kommunikationsnetzwerks implementiert wird, die nicht ausgefallen ist.

2. Steuerungssystem nach Anspruch 1, wobei die zentrale Steuerung (210) weiterhin eine Vielzahl von ersten Stromquellenschnittstellen (P1, P2, P3) umfasst, wobei jede der Vielzahl von Domänensteuerungen (220, 230, 240) weiterhin eine zweite Stromquellenschnittstelle (C1, C2, C3) umfasst, die Vielzahl von ersten Stromquellenschnittstellen (P1, P2, P3) und mehrere zweite Stromquellenschnittstellen (C1, C2, C3) eine Vielzahl von Stromquellenschnittstellenpaaren bilden, wobei die mehreren Stromquellenschnittstellenpaare ein Sternnetzwerk bilden, so dass das Sternnetzwerk eine erste Schicht eines elektrischen Energienetzwerks zwischen der zentralen Steuerung und der Vielzahl von Domänensteuerungen bereitstellt und die zentrale Steuerung (210) die Übertragung elektrischer Energie mit der Vielzahl von Domänensteuerungen (220, 230, 240) durch die erste Schicht des elektrischen Energienetzwerks durchführt; und
jede von mindestens zwei Domänensteuerungen (220, 230, 240) in der Vielzahl von Domänensteuerungen (220, 230, 240) weiterhin eine dritte Stromquellenschnittstelle (D1, D2, D3, D4, D5, D6) umfasst, wobei die Vielzahl von Domänensteuerungen (220, 230, 240) über die dritten Stromquellenschnittstellen (D1, D2, D3, D4, D5, D6) ein Ringnetzwerk bilden, das Ringnetzwerk eine Vielzahl von Knoten umfasst und jede der Vielzahl von Domänensteuerungen (220, 230, 240) einen Knoten in der Vielzahl von Knoten bildet, so dass das Ringnetzwerk eine zweite Schicht des elektrischen Energienetzwerks zwischen den mindestens zwei Domänensteuerungen bereitstellt und die mindestens zwei Domänensteuerungen (220, 230, 240) untereinander eine elektrische Energieübertragung über die zweite Schicht des elektrischen Energienetzwerks durchführen; wobei
wenn ein Fehler in der ersten oder zweiten Schicht des elektrischen Energienetzwerks auftritt, die Übertragung elektrischer Energie zwischen der zentralen Steuerung und den mindestens zwei Domänensteuerungen über die nicht ausgefallene Schicht erfolgt.

3. Steuerungssystem nach Anspruch 2, wobei mindestens einer der Vielzahl von Domänensteuerungen (220, 230, 240) eine erste Stromversorgungsschnittstelle (S1) umfasst und die erste Stromversorgungsschnittstelle (S1) konfiguriert ist, elektrische Energie von einem Batteriepack (30) und/oder einer Batterie des Fahrzeugs (100) zu beziehen.

4. Steuerungssystem nach einem der Ansprüche 2 oder 3, wobei die zentrale Steuerung (210) weiterhin eine zweite Stromversorgungsschnittstelle (M1) umfasst und die zweite Stromversorgungsschnittstelle (M1) dazu konfiguriert ist, elektrische Energie aus dem Batteriepack und/oder der Batterie (30) des Fahrzeugs (100) zu beziehen.

5. Steuerungssystem nach einem der Ansprüche 2 bis 4, wobei jeder der Vielzahl von Domänensteuerungen (220, 230, 240) außerdem eine vierte Stromquellenschnittstelle umfasst und jede der Vielzahl von Domänensteuerungen die Übertragung elektrischer Energie mit einem domäneninternen Aktuator und/oder einem Sensor jeder Domänensteuerung über die vierte Stromquellenschnittstelle durchführt.

6. Steuerungssystem nach einem der Ansprüche 2 bis 5, wobei
die Kommunikationsschnittstelle (T1) und die Stromquellenschnittstelle (P1) der zentralen Steuerung in einer Schnittstelle zusammengefasst sind;
die ersten Domänenkommunikationsschnittstellen (A1) und die zweite Stromquellenschnittstelle (C1) der Domänensteuerungen in einer Schnittstelle zusammengefasst sind; und
die dritten Domänenkommunikationsschnittstellen (B1) und die vierte Stromquellenschnittstelle (D1) zu einer Schnittstelle kombiniert werden.

## Revendications

1. Système de commande (200) pour un véhicule (100), comprenant : une pluralité de dispositifs de commande de domaine (220, 230, 240) et un dispositif de commande central (210), dans lequel
la pluralité de dispositifs de commande de domaine (220, 230, 240) est configurée pour obtenir respectivement des informations d'état d'une pluralité de domaines et envoyer les informations d'état de la pluralité de domaines au dispositif de commande central (210), dans lequel le véhicule (100) comprend la pluralité de domaines, et la pluralité de dispositifs de commande de domaine (220, 230, 240) sont en correspondance biunivoque avec la pluralité de domaines ; et,
le dispositif de commande central (210) est configuré pour recevoir les informations d'état de la pluralité de domaines en provenance de la pluralité de dispositifs de commande de domaine (220, 230, 240), et générer un signal de commande de domaine sur la base des informations d'état de la pluralité de domaines, dans lequel le signal de contrôle de domaine est utilisé pour contrôler les états de fonctionnement de la pluralité de domaines, dans lequel le système de commande est **caractérisé en ce que** :
le dispositif de commande central (210) comprend une pluralité de premières interfaces de communications centrales (T1, T2, T3), chacun de la pluralité de dispositifs de commande de domaine (220, 230, 240) comprend une première interface de communications de domaine (A1, A2, A3), la pluralité de premières interfaces de communications centrales (T1, T2, T3) et une pluralité de premières interfaces de communications de domaine (A1, A2, A3) forment une pluralité de paires d'interfaces de communications (T1-A1, T2-A2, T3-A3), dans lequel la pluralité de paires d'interfaces de communications forme un réseau en étoile, de sorte que le réseau en étoile fournit une première couche d'un réseau de communications entre le dispositif de commande central et la pluralité de dispositifs de commande de domaine, et que le dispositif de commande central (210) communique avec la pluralité de dispositifs de commande de domaine (220, 230, 240) à travers la première couche du réseau de communications ; et
chacun d'au moins deux dispositifs de commande de domaine (220, 230, 240) dans la pluralité de dispositifs de commande de domaine (220, 230, 240) comprend en outre une deuxième interface de communications de domaine (B1, B2, B3, B4, B5, B6), dans lequel la pluralité de dispositifs de commande de domaine (220, 230, 240) forment un réseau en anneau à travers les deuxièmes interfaces de communications de domaine (B1, B2, B3, B4, B5, B6), le réseau en anneau comprend une pluralité de noeuds, et chacun de la pluralité de dispositifs de commande de domaine (220, 230, 240) forment un noeud dans la pluralité de noeuds, de sorte que les deuxièmes interfaces de communications de domaine fournissent une seconde couche du réseau de communications entre les au moins deux dispositifs de commande de domaine, et les au moins deux dispositifs de commande de domaine communiquent (220, 230, 240) les uns avec les autres à travers la seconde couche du réseau de communications ; dans lequel
lorsqu'un défaut de communication se produit dans la première ou la seconde couche du réseau de communications, la communication entre le dispositif de commande central et les au moins deux dispositifs de commande de domaine est mise en œuvre à travers la couche du réseau de communications qui n'est pas défaillante.

2. Système de commande selon la revendication 1, dans lequel le dispositif de commande central (210) comprend en outre une pluralité de premières interfaces de source d'alimentation (P1, P2, P3), chacun de la pluralité de dispositifs de commande de domaine (220, 230, 240) comprend en outre une deuxième interface de source d'alimentation (C1, C2, C3), la pluralité de premières interfaces de source d'alimentation (P1, P2, P3) et une pluralité de deuxièmes interfaces de source d'alimentation (C1, C2, C3) forment une pluralité de paires d'interfaces de source d'alimentation, dans lequel la pluralité de paires d'interfaces de source d'alimentation forment un réseau en étoile, de sorte que le réseau en étoile fournit une première couche d'un réseau d'énergie électrique entre le dispositif de commande central et la pluralité de dispositifs de commande de domaine, et le dispositif de commande central (210) effectue une transmission d'énergie électrique avec la pluralité de dispositifs de commande de domaine (220, 230, 240) à travers la première couche du réseau d'énergie électrique ; et
chacun d'au moins deux dispositifs de commande de domaine (220, 230, 240) dans la pluralité de dispositifs de commande de domaine (220, 230, 240) comprend en outre une troisième interface de source d'alimentation (D1, D2, D3, D4, D5, D6), dans lequel la pluralité de dispositifs de commande de domaine (220, 230, 240) forment un réseau en anneau via les troisièmes interfaces de source d'alimentation (D1, D2, D3, D4, D5, D6), le réseau en anneau comprend une pluralité de noeuds, et chacun de la pluralité de dispositifs de commande de domaine (220, 230, 240) forment un noeud parmi la pluralité de noeuds, de telle sorte que le réseau en anneau fournit une seconde couche du réseau d'énergie électrique entre les au moins deux dispositifs de commande de domaine et les au moins deux dispositifs de commande de domaine (220, 230, 240) effectuent une transmission d'énergie électrique entre eux à travers la seconde couche du réseau d'énergie électrique ; dans lequel
lorsqu'une défaillance se produit dans la première ou la seconde couche du réseau d'énergie électrique, la transmission d'énergie électrique entre le dispositif de commande central et les au moins deux dispositifs de commande de domaine est mise en œuvre à travers la couche qui n'a pas échoué.

3. Système de commande selon la revendication 2, dans lequel au moins l'un de la pluralité de dispositifs de commande de domaine (220, 230, 240) comprend une première interface d'alimentation (S1), et la première interface d'alimentation (S1) est configurée pour obtenir de l'énergie électrique provenant d'un bloc-batterie (30) et/ou d'une batterie du véhicule (100).

4. Système de commande selon l'une quelconque des revendications 2 ou 3, dans lequel le dispositif de commande central (210) comprend en outre une deuxième interface d'alimentation (M1), et la deuxième interface d'alimentation (M1) est configurée pour obtenir de l'énergie électrique à partir du bloc-batterie et/ou de la batterie (30) du véhicule (100) .

5. Système de commande selon l'une quelconque des revendications 2 à 4, dans lequel chacun de la pluralité de dispositifs de commande de domaine (220, 230, 240) comprend en outre une quatrième interface de source d'alimentation, et chacun de la pluralité de dispositifs de commande de domaine effectue une transmission d'énergie électrique avec un actionneur intra-domaine et/ou un capteur de chaque contrôleur de domaine à travers la quatrième interface de source d'alimentation.

6. Système de commande selon l'une quelconque des revendications 2 à 5, dans lequel
l'interface de communications (T1) et l'interface de source d'alimentation (P1) du dispositif de commande central sont combinées en une seule interface ;
les premières interfaces de communications de domaine (A1) et la deuxième interface de source d'alimentation (C1) des dispositifs de commande de domaine sont combinées en une seule interface ; et
la troisième interface de communications de domaine (B1) et la quatrième interface de source d'alimentation (D1) doivent être combinées en une seule interface.
